(19) Europäisches Patentamt
European Patent Office
Office européen des brevets

(11) Veröffentlichungsnummer: **0 280 221 B1**

(12) **EUROPÄISCHE PATENTSCHRIFT**

(45) Veröffentlichungstag der Patentschrift: **06.05.92**

(51) Int. Cl.[5]: **C08L 77/00**, C08K 5/10, C08J 3/20

(21) Anmeldenummer: **88102518.3**

(22) Anmeldetag: **20.02.88**

Die Akte enthält technische Angaben, die nach dem Eingang der Anmeldung eingereicht wurden und die nicht in dieser Patentschrift enthalten sind.

(54) **Polyamidgranulat mit äusserer Hülle.**

(30) Priorität: **27.02.87 DE 3706356**

(43) Veröffentlichungstag der Anmeldung:
**31.08.88 Patentblatt 88/35**

(45) Bekanntmachung des Hinweises auf die Patenterteilung:
**06.05.92 Patentblatt 92/19**

(84) Benannte Vertragsstaaten:
**BE CH DE FR GB LI NL**

(56) Entgegenhaltungen:
**EP-A- 0 125 483**
**DE-A- 2 829 625**
**DE-A- 2 856 457**
**DE-C- 1 142 696**
**DE-C- 1 197 615**

**KUNSTSTOFF-HANDBUCH Band 6 "Polyamide", Carl Hanser Verlag, München, 1966, Seite 244**

(73) Patentinhaber: **BASF Aktiengesellschaft**
**Carl-Bosch-Strasse 38**
**W-6700 Ludwigshafen(DE)**

(72) Erfinder: **Reimann, Horst, Dr.**
**Adelheidstrasse 26**
**W-6520 Worms 1(DE)**
Erfinder: **Zahradnik, Franz, Dr.**
**Schwedlerstrasse 120**
**W-6700 Ludwigshafen(DE)**
Erfinder: **Weiss, Hans-Peter, Dr.**
**Pfalzring 75**
**W-6704 Mutterstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 280 221 B1

## Beschreibung

Die Erfindung betrifft Polyamidgranulat auf der Basis von

A) 20 bis 99,99 Gew.% eines Polyamids

B) 0 bis 60 Gew.% faser- oder teilchenförmigen Füllstoffen oder deren Mischungen

C) 0 bis 40 Gew.% schlagzäh modifizierendem Kautschuk

enthaltend

D) 0,01 bis 1 Gew.% einer äußeren Hülle aus einer Mischung aus

$d_1$) Zink- oder Aluminiumstearat oder deren Mischungen

$d_2$) Calciumstearat

$d_3$) Estern aliphatischer Carbonsäuren mit 6 bis 24 C-Atomen mit aliphatischen gesättigten Alkoholen, die 2 bis 24 C-Atome enthalten.

Weiterhin betrifft die Erfindung die Verwendung der Polyamidgranulate zur Herstellung von Formkörpern.

Polyamide, die im Spritzguß zu Formkörpern verarbeitet werden, enthalten im allgemeinen zur Verbesserung des Einzugs- und Entformungsverhaltens Schmiermittel. Diese können entweder in die Polymeren eingearbeitet oder oberflächlich auf das Polymergranulat aufgebracht sein. Das oberflächliche Aufbringen hat den Vorteil, daß es ohne Aufschmelzen des Polyamids erfolgen kann. Die Auftragsmenge ist dabei jedoch wegen der Gefahr der Entmischung in der Regel begrenzt; außerdem entstehen, vor allem bei Auftrommeln von pulverförmigen Schmiermitteln, bei der pneumatischen Beschickung der Spritzgußmaschinen Schwierigkeiten, da das Pulver auf dem Granulat nicht fest haftet und daher staubt.

Aus der DE-A 28 56 457 ist Polyamidgranulat bekannt, welches oberflächlich mit 0,01 bis 1 Gew.% eines Esters von aliphatischen gesättigten Carbonsäuren und aliphatischen gesättigten Alkoholen aus wäßriger Dispersion heraus beschichtet ist. Durch die Beschichtung aus wäßriger Dispersion heraus erhält man eine bessere Haftung des Schmiermittels am Polyamidgranulat und damit werden die Probleme des Staubens bei der Verarbeitung verringert.

Aus der DE-A 28 29 625 ist Polyamidgranulat bekannt, welches in ähnlicher Weise wie in der DE-A 28 56 457 aus wäßriger Dispersion heraus beschichtet ist. Gemäß dieser Anmeldung wird ein Paraffin als Beschichtungsmittel verwendet.

Beiden vorstehend genannten Produkten haftet grundsätzlich der Nachteil an, daß bei der Beschichtung aus wäßriger Dispersion heraus nach erfolgter Beschichtung das Wasser wieder entfernt werden muß, und daß insgesamt die beim Spritzguß erzielbaren Zykluszeiten nicht voll zufriedenstellend sind.

Es ist weiterhin bekannt, Zinkstearat als Schmelze oberflächlich auf Polyamid-Granulat aufzubringen. Dabei werden jedoch in der Regel Spritzer an der Oberfläche der Formteile beobachtet, die nicht akzeptiert werden können.

Durch die Verwendung von Calciumstearat anstelle von Zinkstearat kann zwar die Gefahr der Bildung von Spritzern an der Oberfläche von Formteilen verringert werden, doch ist Calciumstearat aufgrund seines hohen Schmelzpunktes nur schwierig aus der Schmelze auf Polyamid-Granulat aufzubringen.

Aufgabe der vorliegenden Erfindung war es daher, Polyamid-Granulat mit einer äußeren Schmiermittelbeschichtung zur Verfügung zu stellen, welches auf einfache Weise herstellbar ist und welches nach der Beschichtung ohne Schwierigkeiten im Spritzguß zu Formkörpern weiterzuverarbeiten ist.

Diese Aufgabe wird erfindungsgemäß durch die eingangs definierten Polyamid-Granulate gelöst.

Als Komponente A) enthalten die erfindungsgemäßen Granulate ein Polyamid. Das Granulat hat vorzugsweise Zylinder- oder Linsenform und weist einen Durchmesser von etwa 1 bis 6 mm und eine Länge von etwa 2 bis 8 mm auf.

Bei den Polyamiden handelt es sich um teilkristalline oder amorphe Polyamide, die z.B. durch Kondensation äquimolarer Mengen einer gesättigten Dicarbonsäure mit 4 bis 12 Kohlenstoffatomen mit Diaminen mit 4 bis 14 Kohlenstoffatomen hergestellt werden können. Weitere geeignete Polyamide sind z.B. durch Kondensation von $\omega$-Aminocarbonsäuren oder durch Polyaddition von Lactamen erhältlich.

Als Dicarbonsäuren seien hier nur Adipinsäure, Azelainsäure, Sebacinsäure, Dodecandisäure, Terephthalsäure und als Diamine Hexamethylendiamin, Trimethylhexamethylendiamin, Di-(4-aminocyclohexyl)-methan und 2,2-Di-(4′-aminocyclohexyl)-propan genannt. Auch Copolyamide, die durch Polykondensation von Lactamen zusammen mit den oben genannten Dicarbonsäuren und Diaminen erhalten werden, sowie Mischungen verschiedener Polyamide sind grundsätzlich geeignet.

Beispiele solcher Polyamide sind z.B. Polycaprolactam, Polyhexamethylenadipinsäureamid, Polyhexamethylensebacinsäureamid, Polylaurinlactam, Polyhexamethylendodecandisäureamid und Polyhexamethylensebacinsäureamid.

Die Polyamide weisen im allgemeinen eine relative Viskosität von 2,5 bis 5 auf, bestimmt an einer 1 %igen Lösung in konzentrierter Schwefelsäure bei 23 ° C, was in etwa einem Molekulargewicht von 15 000 bis 45 000 entspricht (Gewichtsmittelwert).

Der Anteil des Polyamids A an den erfindungsgemäßen Granulaten beträgt 20 bis 99,99, vorzugsweise 40 bis 95 und insbesondere 50 bis 90 Gew.%.

Als Komponente B können die erfindungsgemäßen Granulate bis zu 60 Gew.% faser- oder teilchenförmige Füllstoffe oder deren Mischungen enthalten. Als Beispiele für Füllstoffe seien Asbest, Kohle, Glasfasern in Form von Glasgeweben, Glasmatten, Glasvliesen oder Glasseidenrovings, Wollastonit, Calciumcarbonat, Glaskugeln, Quarzmehl, Silicium- und Bornitrid oder Mischungen dieser Füllstoffe genannt.

Der Anteil der Füllstoffe beträgt 0 bis 6.0 Gew.%, vorzugsweise 2 bis 50 Gew.% und insbesondere 5 bis 40 Gew.%, bezogen auf das Gesamtgewicht der Granulate.

Als weitere Komponente C) kann in den erfindungsgemäßen Granulaten ein schlagzäh modifizierender Kautschuk in Mengen von bis zu 40 Gew.%, vorzugsweise von 2 bis 40 Gew.% und insbesondere von 4,9 bis 30 Gew.% enthalten sein.

Nur beispielsweise seien als schlagzäh modifizierende Kautschuke Elastomere auf Ethylen-, Propylen-, Butadien- oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 65:35 aufweisen.

Die Mooney-Viskositäten (MLI + 4/100 ° C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 ° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie 1,4-Butadien, 1,4-Hexadien, 1,5-Hexadien, 2,5-Dimethyl-1,5-hexadien und 1,4-Octadien, cyclische Diene wie Cyclopentadien, Cyclohexadien, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexadien-1,5, 5-Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure- und/oder Methacrylsäureestern, insbesondere solche die zusätzlich noch Epoxy-Gruppen enthalten. Diese Epoxygruppen werden vorzugsweise durch Zugabe von Epoxygruppen enthaltenden Monomeren der allgemeinen Formeln II oder III zum Monomerengemisch in den Kautschuk eingebaut

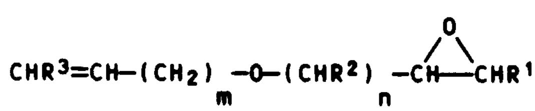 (II)

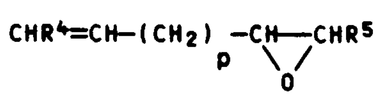 (III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel II sind Epoxygruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

| | |
|---|---|
| 50 bis 98, insbesondere 60 bis 95 Gew.% | Ethylen, |
| 1 bis 40, insbesondere 2 bis 20 Gew.% | Glycidylacrylat und/oder Glycidylmethacrylat, |
| 1 bis 45, insbesondere 10 bis 35 Gew.% | n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (Kautschuke) D) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk D) können auch Pfropfpolymerisate aus

| | |
|---|---|
| 25 bis 98 Gew.% | eines Acrylatkautschuks mit einer Glasübergangstemperatur von unter -20 °C als Pfropfgrundlage |
| | und |
| 2 bis 75 Gew.% | eines copolymerisierbaren ethylenisch ungesättigten Monomeren, dessen Homo- bzw. Copolymerisate eine übergangstemperatur von mehr als 25 °C aufweisen, als Pfropfauflage |

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, $\alpha$-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen vorzugsweise eine Glasübergangstemperatur von unter -30 °C, insbesondere von unter -40 °C auf, was zu einer guten Schlagzähigkeit auch bei tiefen Temperaturen führt.

Es versteht sich, daß auch Mischungen der vorstehend aufgeführten Kautschuktypen eingesetzt werden können.

Wesentliche Komponente der erfindungsgemäßen Granulate ist die äußere Hülle D) aus 0,01 bis 1,0 Gew.% Zink- oder Aluminiumstearat oder deren Mischungen ($d_1$), Calciumstearat ($d_2$) und Estern aliphatischer Carbonsäuren mit 6 bis 24 C-Atomen mit aliphatischen gesättigten Alkoholen, die 2 bis 24 C-Atome enthalten ($d_3$).

Vorzugsweise werden Mischungen eingesetzt, in denen das Gewichtsverhältnis der Komponenten $d_1$ zu $d_2$ im Bereich von 3:7 bis 7:3, insbesondere von 4:6 bis 6:4 und das Gewichtsverhältnis aus der Summe der Komponenten $d_1$ und $d_2$ zur Komponente $d_3$ im Bereich von 3:7 bis 7:3 liegt.

Werden als Komponente $d_1$) Mischungen aus Zink- und Aluminiumstearat verwendet, so liegt deren Gewichtsverhältnis im allgemeinen im Bereich von 1:10 bis 10:1.

Bei der Komponente $d_3$) handelt es sich um Ester von aliphatischen, vorzugsweise 1- oder 2-wertigen Carbonsäuren mit 6 bis 24 C-Atomen mit aliphatischen gesättigten, vorzugsweise 1- bis 4-wertigen Alkoholen mit 2 bis 24 C-Atomen. Als Beispielse für Carbonsäuren seien Pelargonsäure, Palmitinsäure, Laurinsäure, Margarinsäure, Adipinsäure und Dodecandisäure sowie Stearinsäure, welche im allgemeinen bevorzugt wird, genannt.

Beispiele für Alkohole sind n-Butanol, n-Octanol, Stearylalkohol, Ethylenglykol, Neopentylglykol, Glycerin und Pentaerythrit, wovon Stearylalkohol und Glycerin im allgemeinen bevorzugt werden.

Aus dem Vorstehenden ergibt sich, daß besonders bevorzugte Ester Stearylstearat und Glycerinmonostearat sind.

Der Anteil der äußeren Hülle beträgt 0,01 bis 1, vorzugsweise 0,02 bis 0,8 und insbesondere 0,05 bis 0,5 Gew.%, bezogen auf das Gesamtgewicht des Granulats.

Das Aufbringen der äußeren Hülle kann vorteilhaft dadurch erfolgen, daß man die Schmelze der Mischung aus den Komponenten $d_1$) bis $d_3$) in einem Taumelmischer oder einer anderen für derartige Verfahren bekannten Vorrichtung direkt auf das Polyamid-Granulat aufbringt. Die Temperaturen des Granulats liegen dabei im allgemeinen bei 90 bis 120, vorzugsweise 100 bis 120 °C.

Das erfindungsgemäße Polyamid-Granulat weist gegenüber den aus dem Stand der Technik bekannten, mit einer äußeren Hülle zur Schmierung versehenen Granulaten eine Reihe von bemerkenswerten Vorteilen auf.

Zum einen weisen die Mischungen aus den Komponenten $d_1$) bis $d_3$) innerhalb der genannten Zusammensetzungsbereiche niedrigere Schmelzpunkte auf, als jede der Komponenten für sich allein oder auch Mischungen von nur 2 der 3 Komponenten. Dadurch wird es möglich, die Temperatur des Polyamid-Granulats bei der Aufbringung der Beschichtung zu senken, wodurch die Gefahr von Verklebungen und die Bildung von Schmiermittelklumpen deutlich verringert wird.

Durch die niedrige Viskosität der Schmelze bei derart niedrigen Temperaturen wird auch eine sehr gleichmäßige Beschichtung des Granulats ermöglicht und Anbackungen in den Produktleitungen werden weitestgehend vermieden. Derartige Verklebungen und Anbackungen sind z.B. häufig bei der Verwendung von Mischungen aus Zinkstearat und Stearylstearat zu beobachten.

Darüber hinaus ist die Viskosität der zur Beschichtung verwendeten Mischungen bereits bei Temperaturen unter 110, insbesondere sogar unter 100 °C bereits sehr niedrig, was eine gleichmäßige Beschichtung des Granulats bei niedrigen Temperaturen ermöglicht.

Ein weiterer Vorteil liegt darin, daß die Zykluszeiten bei der Verarbeitung der erfindungsgemäßen Granulate, z.B. im Spritzguß, gegenüber den bekannten Granulaten deutlich verkürzt werden können. Die aus den Granulaten erhältlichen Formkörper zeichnen sich durch eine sehr gute Oberflächenstruktur aus.

Beispiele 1 bis 9

Es wurden Mischungen aus Zinkstearat ($d_1$), Calciumstearat ($d_2$) und Stearylstearat ($d_3$) hergestellt und die Schmelzpunkte und Eigenschaften der Schmelze im Vergleich zu binären Mischungen aus zwei der Komponenten bestimmt.

| Beispiel | Komponente (Gew.%) $d_1$ | $d_2$ | $d_3$ | Schmelzpunkt °C | Eigenschaften |
|---|---|---|---|---|---|
| 1V | 50 | 50 | - | 108 | zähflüssig, schwierig auf Granulat aufzubringen |
| 2V | 50 | - | 50 | 114 | neigt zu Schlierenbildung |
| 3V | - | 50 | 50 | 117 | zähflüssig |
| 4 | 21 | 49 | 30 | 109 | dünnflüssig, klar, keine Schlierenbildung |
| 5 | 28 | 42 | 30 | 103 | " " |
| 6 | 24 | 36 | 40 | 105 | " " |
| 7 | 35 | 35 | 30 | 99 | " " |
| 8 | 25 | 25 | 50 | 93 | " " |
| 9 | 15 | 15 | 70 | 99 | " " |

Aus den Ergebnissen erkennt man deutlich die niedrigen Schmelzpunkte und die vorteilhaften Eigenschaften der zur Herstellung der erfindungsgemäßen Granulate verwendeten ternären Mischungen.

Beispiel 10

Polyhexamethylenadipinsäureamid ($A_1$) bzw. Polycaprolactam ($A_2$) in Form von Zylindern mit 3 mm Durchmesser und 4 mm Länge wurden mit den in Tabelle 2 angegebenen Beschichtungsmitteln beschichtet. Die Beschichtung erfolgte mit Hilfe eines Taumelmischers, in dem die Schmelze des Beschichtungsmittels auf das Granulat aufgebracht wurde.

Die beschichteten Granulate wurden auf einer Schneckenspritzgußmaschine (Schneckendurchmesser 52 mm) zu Staubsaugerdeckeln verarbeitet. Dabei wurden folgende Spritzgußbedingungen gewählt:

Massetemperatur: 290 °C
Formtemperatur: 60 °C

Spritzdruck: 320 bar (3,2 × $10^7$ Pa)
Die kürzestmöglichen Zykluszeiten sind in Tabelle 2 angegeben.

Tabelle 2

| Beispiel | Polyamid | Beschichtungsmittel | Menge (Gew.%) | Beschichtungs-temperatur °C | Zyklus-zeit sec |
|---|---|---|---|---|---|
| 10* V | $A_1$ | Paraffin | 0,2 | | 48 |
| 11 V | $A_1$ | Stearylstearat | 0,08 | | 45 |
| 12 V | $A_1$ | Zn-Stearat | 0,05 | | 71 |
| 13 | $A_1$ | wie in Beispiel 9 | 0,14 | | 38 |

V zum Vergleich

*Hierbei wurde das Paraffin aus wäßriger Dispersion gemäß Beispiel 3 der DE-A-28 29 625 aufgebracht.

Die Ergebnisse in Tabelle 2 zeigen, daß die erfindungsgemäßen Granulate bei Beschichtung bei niedrigeren Temperaturen mit deutlich geringeren Zykluszeiten im Spritzguß verarbeitet werden können.

**Patentansprüche**

**1.** Polyamidgranulat auf der Basis von
A) 20 bis 99,99 Gew.% eines Polyamids
B) 0 bis 60 Gew.% faser- oder teilchenförmigen Füllstoffen oder deren Mischungen
c) 0 bis 40 Gew.% schlagzäh modifizierendem Kautschuk
enhaltend
D) 0,01 bis 1 Gew.% einer äußeren Hülle aus einer Mischung aus
$d_1$) Zink- oder Aluminiumstearat oder deren Mischungen
$d_2$) Calciumstearat
$d_3$) Estern aliphatischer Carbonsäuren mit 6 bis 24 C-Atomen mit aliphatischen gesättigten Alkoholen, die 2 bis 24 C-Atome enthalten.

**2.** Polyamidgranulat nach Anspruch 1, dadurch gekennzeichnet, daß das Gewichtsverhältnis $d_1/d_2$ im Bereich von 3:7 bis 7:3 und das Gewichtsverhältnis $(d_1 + d_2)/d_3$ im Bereich von 3:7 bis 7:3 liegt.

**3.** Polyamidgranulat nach Anspruch 2, dadurch gekennzeichnet, daß das Gewichtsverhältnis $d_1/d_2$ im Bereich von 4:6 bis 6:4 liegt.

**4.** Verwendung des Polyamidgranulats gemäß den Ansprüchen 1 bis 3 zur Herstellung von Formkörpern.

**Claims**

**1.** Nylon granules based on
A) from 20 to 99.99% by weight of a nylon,
B) from 0 to 60% by weight of fibrous or particulate fillers or a mixture thereof and
C) from 0 to 40% by weight of an impact modifying rubber
and containing
D) from 0.01 to 1% by weight of an outer shell consisting of a mixture of
$d_1$) zinc stearate or aluminum stearate or a mixture of these,
$d_2$) calcium stearate and

$d_3$) an ester of an aliphatic carboxylic acid of 6 to 24 carbon atoms with an aliphatic saturated alcohol of 2 to 24 carbon atoms.

**2.** Nylon granules as claimed in claim 1, wherein the weight ratio of $d_1$ to $d_2$ is from 3:7 to 7:3 and the weight ratio of ($d_1$ + $d_2$) to $d_3$ is from 3:7 to 7:3.

**3.** Nylon granules as claimed in claim 2, wherein the weight ratio of $d_1$ to $d_2$ is from 4:6 to 6:4.

**4.** The use of nylon granules as claimed in claims 1 to 3 for the production of moldings.

**Revendications**

**1.** Granulés de polyamide à base de
A) 20 à 99,99% en poids d'un polyamide
B) 0 à 60% en poids de charges sous forme de fibres ou de petites particules ou de leurs mélanges
C) 0 à 40% en poids d'un caoutchouc de modification de la ténacité aux chocs,
contenant
D) de 0,01 à 1% en poids d'un revêtement extérieur composé d'un mélange de
$d_1$) stéarate de zinc ou d'aluminium ou de leurs mélanges
$d_2$) stéarate de calcium
$d_3$) esters d'acides carboxyliques aliphatiques ayant de 6 à 24 atomes de carbone avec des alcools satures aliphatiques qui contiennent de 2 à 24 atomes de carbone.

**2.** Granulés de polyamide selon la revendication 1, caractérisés en ce que le rapport pondéral $d_1/d_2$ est compris entre 3:7 et 7:3 et que le rapport pondéral ($d_1$ + $d_2$)/$d_3$ est compris entre 3:7 et 7:3.

**3.** Granulés de polyamide selon la revendication 2, caractérisés en ce que le rapport pondéral $d_1/d_2$ est compris entre 4:6 et 6:4.

**4.** Utilisation des granulés de polyamide selon les revendications 1 à 3 pour la préparation d'articles moulés.